**Europäisches Patentamt**

(19) **European Patent Office**

**Office européen des brevets**

(11) Veröffentlichungsnummer: **0 021 048**
**B1**

(12) **EUROPÄISCHE PATENTSCHRIFT**

(45) Veröffentlichungstag der Patentschrift: 05.03.86

(21) Anmeldenummer: 80102847.3

(22) Anmeldetag: 22.05.80

(51) Int. Cl.⁴: **G 01 P 3/36**, G 01 P 5/00,
G 01 S 17/58

(54) Vorrichtung zur berührungslosen fotoelektrischer Messung der Geschwindigkeit von sich in einem Objektraum bewegenden Objekten.

(30) Priorität: 06.06.79 DE 2922873
06.06.79 DE 2922839

(43) Veröffentlichungstag der Anmeldung:
07.01.81 Patentblatt 81/01

(45) Bekanntmachung des Hinweises auf die
Patenterteilung:
05.03.86 Patentblatt 86/10

(84) Benannte Vertragsstaaten:
AT BE CH FR GB IT LI LU NL SE

(56) Entgegenhaltungen:
DE-A-1 673 403
US-A-3 419 330
US-A-3 753 616
US-A-3 860 342
US-A-3 915 572

OPTO ELECTRONICS, Band 5, März 1973,
London, GB, YU. G. VASILENKO et al.: "The
development of an optical Doppler technique
for measuring flow velocities", Seiten 153-161

(73) Patentinhaber: **Messmetallurgie GmbH**
**Haldenweg 10**
**D-5810 Witten (DE)**

(72) Erfinder: **Chrestin, Dirk, Dipl.-Phys.**
**Ferdinand-Wallbrecht-Strasse 6-8**
**D-3000 Hannover 1 (DE)**
Erfinder: **Hock, Fromund, Prof. Dr.-Ing.**
**Bergstrasse 12**
**D-3003 Ronnenberg 3 (DE)**
Erfinder: **Ringer, Kurt, Dipl.-Phys.**
**Lessingstrasse 5**
**D-3000 Hannover 91 (DE)**
Erfinder: **Ulbers, Gerd, Dipl.-Phys.**
**Auf dem Emmerberge 26**
**D-3000 Hannover (DE)**

(74) Vertreter: **Leine, Sigurd, Dipl.-Ing. et al**
**LEINE & KÖNIG Patentanwälte**
**Burckhardtstrasse 1**
**D-3000 Hannover 1 (DE)**

Courier Press, Leamington Spa, England.

# 0 021 048

(56) References cited:

**APPLIED OPTICS, Band 17, 15. September 1978, New York, US, R. SMYTH: "Direction-sensitive simultaneous multivelocity component LDV", Seiten 2855, 2856**
**"Handbook of Optics" von Driscoll and Vaughan, McGraw Hill, New York 1978, S. 17-15 - 17-18**
**"Beiträge zur Interferenzmikroskopie" von N. Krug et al. Akademie-Verlag, Berlin, 1961, 1961. S.107-116**

**Beschreibung**

Die Erfindung betrifft eine Vorrichtung zur berührungslosen fotoelektrischen Messung der Geschwindigkeit von sich in einem Objectraum bewegenden Objekten gemäß Oberbegriff des Anspruchs 1.

In der Prozeßmechanik benötigt man oft die Information über Objektbewegungen in unterschiedlichen Freiheitsgraden und Richtungen, deren berührungslose Messung bisher dadurch erschwert wird, daß die zu beherrschenden großen Signalbandbreiten bzw. Signalfrequenzverhältnisse nur mit erheblichem elektronischen Aufwand bewältigt werden können oder daß bei Verwendung von kohärentem Licht die Meßunsicherheit durch Störlichtinterferenz besonders in der Form von Specklemodulation zu groß wird.

In vielen optischen Anordnungen bestimmt bei kohärenten Teilstrahlen der Durchdringungswinkel dieser Strahlen wesentliche Parameter von Meß- bzw. Beobachtungseinrichtungen. In der Holografie bestimmt beispielsweise der Winkel zwischen Objekt- und Referenzwelle die Gitterkonstante der erzeugten bildspeichernden Interferenzlinien. Optische Aufbauten, die mit Hilfe von Umlenkspiegeln bzw. Prismen, die einem teildurchlässigen Strahlenteilerspiegel nachgeschaltet sind, den Durchdringungswinkel festlegen, sind sehr empfindlich gegenüber Winkelverlagerungen von spiegelnden Flächen, da die Winkelfehler in der Spiegeljustierung verdoppelt werden in der Strahlablenkung. Außerdem muß die Ebene, in der die optimale Strahldurchdringung stattfindet, mit einem optischen Bauelement wie Hologrammplatte, Gitter oder Strahlenteiler oder einer Objektfläche zusammenfallen.

Die US—A—3753616 zeigt eine Vorrichtung zur berührungslosen fotoelektrischen Messung der Geschwindigkeit in Strömungsfeldern. Ein kohärenter, linear polarisierter Laserstrahl wird mit Hilfe eines Strahlenteilers in zwei Teilstrahlen gleicher Intensität aufgespalten. Ein Polarisator dreht die Polarisationsbene des einen Teilstrahles um 90°. Eine Linse bringt die beiden Teilstrahlen in einem Raumpunkt zum Schnitt. Aus dem Raumpunkt kommende Streustrahlung besteht aus zwei orthogonal zueinander polarisierten Streulichtanteilen. Eine Linse führt die Streustrahlen auf einem polarisierenden Strahlenteiler zur Angleichung der Polarisationsrichtungen und zur Erzeugung zweier die Doppler-Information enthaltender Teilstrahlen, Jeder der beiden Teilstrahlen, die um 180° phasenvorschoben sind, fällt auf einen zugeordneten Fotodetektor. Die Ausgangssignale der Fotodetektoren werden nach Invertierung des einen Ausgangssignales addiert, um das Dopplerfrequenz-Signal zu gewinnen. Eine Auswerteeinrichtung ermittelt daraus dann die Geschwindigkeit des Strömungsfeldes. Durch den eingesetzten herkömmlichen Strahlaufspalter entstehen ungleiche optische Weglängen wegen der zweifach Reflexion für den einen Teilstrahl. Dadurch ist der Strahlenteiler kippungsempfindlich; es ist notwendig, sehr scharf frequente Lichtwege zu wählen. Durch die Verwendung konvergenter, sich im Raumpunkt durchdringender Strahlen erhält man undefinierte Durchdringungswinkel und eine Frequenzunschärfe, wodurch die Meßgenauigkeit beeinträchtigt wird.

Die US—A—3744910 zeigt eine Vorrichtung zur berührungslosen fotoelektrischen Messung der Geschwindigkeit von Partikeln. Ein Laserstrahl wird durch eine Linse auf ein holografisches Radialgitter als Strahlenteiler fokussiert, das mehrere um einen Zentralstrahl herum angeordnete Teilstrahlen erzeugt. Eine Linsenanordnung dient der Fokussierung und Strahlenvereinigung mit dem Zentralstrahl in einem Durchdringungspunkt. Dieser Durchringungspunkt liegt in einem Meßraum für einen Partikelstrom. Parikel, die durch den Durchdringungspunkt laufen, erzeugen aus allen Teilstrahlen gleichzeitig Streulicht. Der Teil des aus dem Zentralstrahl herausgestreuten Lichtes, der mit dem Raumwinkelbereich des jeweiligen den Fokus wieder verlassenden Teilstrahles durch Vorwärtsstreuung zusammenfällt, wird auf zugeordneten Detektoren zur Schwebung gebracht. Die Schwebungsfrequenz, die ein Maß für die Geschwindigkeitskomponente ist, wird ermittelt. Durch die mit der Fokussierung entstehenden Winkelbereiche der Fokuslichtkegel ergibt sich einer der Winkelunschärfe entsprechende Frequenzunschärfe, was die Genauigkeit der Geschwindigkeitsmessung beeinträchtigt.

Die Veröffentlichung von R. Smyth "Direction-Sensitive Simultaneous Multivelocity Component LDV" in der Zeitschrift "Applied Optics", 1978, Volume 17, No. 18, Seiten 2855 und 2856, betrifft eine Vorrichtung zur berührungslosen fotoelektrischen Messung der Geschwindigkeit eines Fluids mit suspendierten Partikeln. Ein Laserlichtstrahl wird mit Hilfe einer Linse auf ein rotierendes Gitterpaar geführt, das aus zwei Glasbeugungsgittern besteht, deren Linien eine Neigung von 45° aufweisen. Es werden die gebeugten Strahlen mit der Ordnung +1 und −1 in Form zweier orthogonal zueinander polarisierter Strahlenpaare mit Hilfe einer Linse auf einen Meßpunkt in dem Fluid fokussiert, in dem die Strahlen der Paare interferieren. Das von den suspendierten Partikeln aus dem Durchdringungsbereich der Strahlen herausgestreute Licht fällt auf zwei Analysatoren mit bestimmter Orientierung, so daß das gestreute Licht die gleiche Polarisationsrichtung aufweist wie das konvergente Strahlenpaar, das den Interferenzstreifen im Durchdringungsbereich erzeugt. Jedem gebeugten konvergierenden Strahlenpaar ist ein Fotodetektor zugeordnet, auf den das gestreute Licht fällt und dessen Ausgangssignal proportional zu einer Geschwindigkeitskomponente ist. Die Verwendung konvergenter Strahlen, die sich in einem sehr kleinen Bereich durchdringen, erfordert eine sehr genaue Strahlfürung und die Verwendung scharf frequenter Lichtwege, um genaue Meßergebnisse zu erzielen. Die Durchdringungswinkel sind nicht definiert, wodurch sich eine Frequenzunschärfe und dadurch bedingt eine größere Meßunsicherheit ergeben. Die Verwendung interferierender Strahlen, durch die die Interferenzstreifen im Durchdringungsbereich erzeugt werden, hat den Nachteil, daß meßfehler auftreten können aufgrund von Störreflexen und Störstrahlung.

Die Aufgabe der vorliegenden Erfindung besteht darin, eine Vorrichtung gemäß Oberbegriff des Anspruchs 1 so auszubilden, daß die Meßsicherheit und Auflösung erhöht werden und die Justierung vereinfacht wird.

Diese Aufgabe wird durch die Ausbildung gemäß Kennzeichen des Anspruchs 1 gelöst.

Die Verwendung von Gittern als Strahlenteiler hat den Vorteil, daß bei Änderungen der Strahleinfallsrichtung auf das Gitter die Winkel zwischen den Beugungsordnungen nur in zweiter Ordnung von diesen Änderungen abhängen, so daß ein für lange Zeit stabiler Justierzustand erreicht wird, was die Meßsicherheit erhöht und den Justieraufwand verringert. Durch die erfindungsgemäße Ausbildung sind Strahlteilung und Frequenzverschiebung mit nur einem Bauteil, nämlich dem Gitterpaar möglich. Dadurch ist der Bauaufwand gering und es kann mit weniger Lichtintensität gearbeitet werden. Die erfindungsgemäße Ausbildung bewirkt eine definierte Strahlaufspaltung, wobei die Ausrichtung der Gitterlinien leicht so wählbar ist, daß die Paare von Teilstrahlen für bestimmte Meßkoordunaten erzeugt werden. Durch die Bewegung der beiden Gitter mit verschiedenen Frequenzen werden außerdem Trägerfrequenzen erzeugt, durch die eine Trennung der Meßkoordinaten leichter durchführbar ist. Zweckmäßige und vorteilhafte Weiterbildungen der erfindungsgemäßen Aufgabenlösung sind in den Unteransprüchen gekennzeichnet.

Durch die Weiterbildung nach den Ansprüchen 3 und 4 wird es möglich, justierunempfindliche langzeitstabile Strahlenschnittwinkel im Objektbereich festzulegen und die Änderung des Abstandes der Schnittfläche von den Gittern durch einen einfachen optischen Abgleich zu bewirken. Durch diese Ausbildung wird die Anwendung der erfindungsgemäßen Vorrichtung wesentlich erleichtert, da der Abstand der Vorrichtung vom Objekt und der Strahlenschnittwinkel unabhängig voneinander gewählt werden können.

Die Erfindung soll nachfolgen anhand der beigefügten Zeichnung, in der Ausführungsbeispiele dargestellt sind, näher erläutert werden.

Es zeigt

Fig. 1 schematisch ein Ausführungsbeispiel der vorliegenden Erfindung,

Fig. 2 schematisch eine Anordnung zur Erzeugung eines koplanaren Strahlenbündelpaares gemäß vorliegender Erfindung, und

Fig. 3 eine grafische Darstellung zur Ableitung des Fehlers des Aufspaltwinkels $\Delta\alpha$ des Strahlenteilers (Gitters).

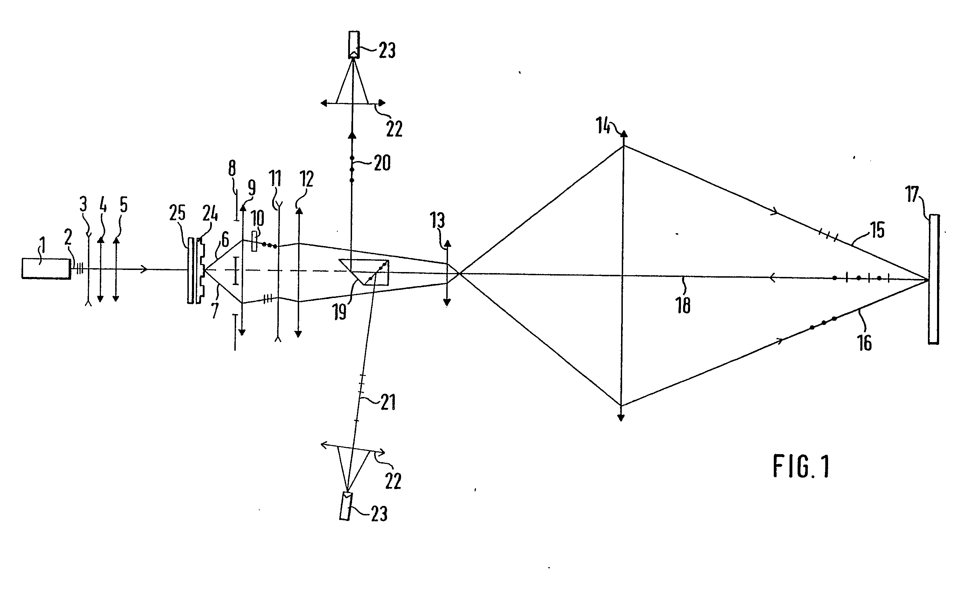

Es soll zunächst Bezug genommen werden auf die Fig. 1. Lichtquelle 1 ist vorzugsweise ein Laser, um monochromatisches Licht zu erzeugen. Er sendet ein Strahlenbündel 2 aus, das durch einen Strahlaufweiter mit den Linsen 3 und 4 auf einen, an der Gitterkonstante gemessen, geeigneten Durchmesser gebracht wird. Das Linsensystem 5, 9 dient dazu, die vier Strahlenbündel, von denen jeweils zwei koplanar durch Gitter 24 und Gitter 25 erzeugt werden, und deren koplanare Ebenen senkrecht aufeinander stehen, in sich parallel zu machen. Der Einfachheit halber ist nur ein Strahlenpaar 6, 7 für eine Meßkoordinate dargestellt. Der Laser liefert linear polarisiertes Licht. Im Strahl 6 wird die lineare Schwingungsrichtung durch ein $\lambda/2$-Plättchen 10 um 90° gedreht. Mit 8 ist ein Doppelspalt bezeichnet. Die Position des Linsenpaares 11, 12 zwischen den Linsen 8 und 13 zusammen mit der Position der Gitter zwischen den Linsen 5 und 9 legt den Einstrahlwinkel auf das Objekt fest. Für verschiedene Objektabstände muß der Einstrahlwinkel variierbar sein. Das Fernrohr 13, 14 fokussiert die Strahlen 15 und 16 auf das Objekt 17, das sich in zwei Koordinaten lateral zur Geräteachse bewegen kann. Als Objekt sind alle Oberfläche zulässig, die die Polarisationsrichtung nur wenig beeinflussen, wie z.B. Metall. Das zurückgestreute oder gebeugte Licht wird wieder durch das Fernrohr 13, 14 gesammelt und läuft auf einen polarisierenden Strahlenteiler 19, dessen Hauptschnitte 45° zu den Hauptschweingungsrichtungen 18 orientiert ist. Aus den beiden Ausgängen erhält man die beiden senkrecht zueinander polarisierenden Strahlen 20 und 21, in denen jeweils eine Komponente von Strahl 15 und 16 steckt. Das Licht wird von den Linsen 22 auf Fotodetektoren 23 fokussiert. Bei Bewegung von 17 erhalten wir dann auf den Fotodetektoren ein Gegentaktsignal. Setzen wir jetzt die beiden Gitter 24 und 25 mit unterschiedlichen Frequenzen $v_1$ und $v_2$, die wesentlich höher als die den nachzuweisenden Objektbewegungen entsprechenden Frequenzen sind, in Schwingungen, so erhalten wir schon bei unbewegtem Objekt 17 Gegentaktsignale. Die den Gitterschweingungen zugeordneten Signalfrequenzpektren werden unter Bezug auf die Gitterbewegungsfrequenzen elektronisch demoduliert. Die durch die Objektbewegung veränderten Signalfrequenzspektren liefern demoduliert die Signale, die die Objektbewegung beschreiben.

Als Quelle elektromagnetischer Wellen 1 kann außer einem Laser ein gepumpter quantenoptischer Oszillator, eine Halbleiter-Strahlungsquelle, die auf thermischer Basis oder durch Lumineszens arbeitet, oder auch eine thermische Strahlungsquelle, wie Spektrallampe, Gasentladungslampe, verwendet werden. Als Strahlenteiler eignet sich ein akustooptischer Modulator. Die geteilten Wellen können mit Hilfe strahlumlenkender optischer Bauelemente 9, 11, 12, 13, 14, wie Linsen, ebene und gekrümmte Spiegel oder Prismen, auf das Meßobjekt gelenkt werden. Allgemein kommen als Strahlenführungsmittel 9, 11, 12, 13, 14 und wellensammelnde Elemente 13, 14, 22, alle dioptrischen, kata-optrischen und kata-dioptrischen Bauelemente in Frage.

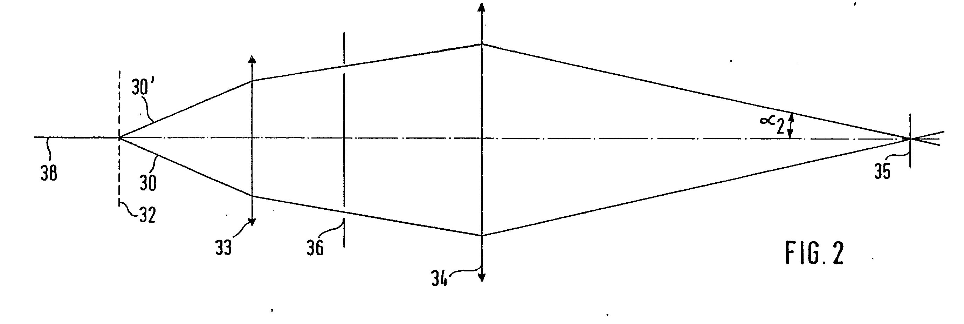

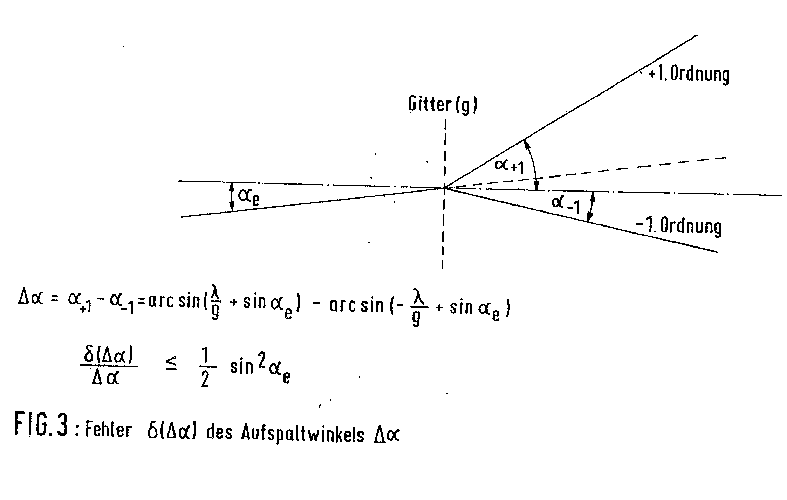

Es soll nun Bezug genommen werden auf die Fig. 2 und 3, die sich auf die Erzeugung zweier sich durchdringender Strahlenbündel 30, 30' beziehen, wobei sowohl die Lage des Durchdringungsbereiches 35 als auch der Durchdringungswinkel $\alpha_2$ fest einstellbar, aber kontinuierlich variabel sind. Dazu wird das einfallende parallele Strahlenbündel mit Hilfe eines Gitters, des Wirkungsgrades halber bevorzugt ein $\lambda/2$-Laminarphasengitter 32, in zwei Teilstrahlen 30, 30' aufgespalten. Jeder der beiden Teilstrahlen fällt als Parallellichtbündel in das teleskopische System, sie werden in diesem, wiederum als Parallellichtbündel, in den gewünschten Durchdringungsbereich so umgelenkt, daß die Gitterebene und die mittlere Durchdringungsebene zueinander konjugiert sind. In der gemeinsamen Brennebene 36 der beiden Baugruppen des teleskopischen Systems 33, 34 wird eine Frequenzfilterung durchgeführt, so daß Streulicht und unerwünschte Beugungsordnungen des Gitter unterdrückt werden. Zur Dimensionierung eines solchen Systems lassen sich die folgenden mathematischen Beziehungen angeben.

$$\Gamma = \frac{f_2}{f_1} \qquad (1)$$

$$\frac{\tan\alpha_2}{\tan\alpha_1} = \frac{f_1}{f_2} \qquad (2)$$

$$b_2 = -\Gamma^2 g_1 + \Gamma(f_1 + f_2) \qquad (3)$$

Mit $\Gamma$ Strahlaufweitungsfaktor
$f_1$ Brennweite der Baugruppe 33
$f_2$ Brennweite der Baugruppe 34
$\alpha_1$ Aufspaltwinkel zwischen 0. und 1. Ordnung des Gitters 32
$2\alpha_2$ Durchdringungswinkel im Durchdringungsbereich 35
$g_1$ Gegenstandsweite Gitter-Baugruppe 33
$b_2$ Bildweite Baugruppe 34, Durchdringungsbereich 35

Wie aus (2) ersichtlich, kann der Durchdringungswinkel $\alpha_2$ kontinuierlich eingestellt werden, wenn z.B. die Baugruppe 34 ein Varioobjekt ist. Der lineare Zusammenhang nach G1. (3) zwischen der Gitterlage und der Lage des Durchdringungsbereichs ermöglicht eine einfache und leicht zu kalibrierende Entfernungseinstellung des Durchdringungsbereichs.

Des Fig. 3 und dort angegebenen Ableitung für den Fehler des Aufspaltungswinkels $\Delta\alpha$ ist entnehmbar, daß der Fehler nur in zweiter Ordnung vom Einfallswinkel $\alpha_e$ auf den Strahlenteiler (Gitter (g)) abhängt.

Die oben anhand der Figuren 2 und 3 beschriebene optische Einrichtung zur Erzeugung zweier sich unter bestimmten winkeln durchdringender koplanarer Strahlenbündel wird in einer Teilanmeldung (veröffentlichungsnummer 0151682) beansprucht.

## Patentansprüche

1. Vorrichtung zur berührungslosen fotoelektrischen Messung der Geschwindigkeit von sich in einem Objektraum bewegenden Objekten, mit

— einer optischen Strahlungsquelle (1) zur Erzeugung eines linear polarisierten, kohärenten Meßlichtbündels (2),
— einem Strahlenteiler (24, 25, 10) zur Aufspaltung des Meßlichtbündels in mindestens ein Paar von unterschiedlich polarisierten Teilstrahlen (6, 7), deren Frequenzen in einem vorgegebenen Zusammenhang stehen,
— ersten optischen Einrichtungen (9, 11—14), mit denen die beiden Teilstrahlen des mindestens einen Paares im Objektraum zum Schnitt gebracht werden,
— jeweils einem den Teilstrahlen des mindestens einen Paares zugeordneten Paar von fotoelektrischen Empfängern (23)
— zweiten optischen Einrichtungen (13, 14, 19) zur Projektion jeweils eines Teils der vom Objekt in eine vorgegebene Richtung gestreuten Anteile eines jeden Teilstrahls auf jeweils einen der dem Paar von Teilstrahlen zugeordneten Empfänger,
— Mittel (19) zur Angleichung der Polarisationsrichtungen der jeweils zu einem Empfänger gelangenden, von unterschiedlichen Teilstrahlen stammenden Strahlungsteile,
— Ausweteeinrichtungen zur Ermittlung der Geschwindigkeit des Objekts aus den sich an den Empfängern ergebenden Schwebungsfrequenzen,

dadurch gekennzeichnet, daß

— der Strahlenteiler zwei hintereinander und parallel zueinander im Meßlichtbündel (2) angeordnete Gitter (24, 25) mit unterschiedlicher Ausrichtung der Gitterlinien umfaßt, durch welche zwei in verschiedenen Ebenen liegende Paare von Teilstrahlen erzeugt werden,
— Mittel zum Bewegen der Gitter (24, 25) mit voneinander verschiedenen Frequenzen (81, 82) vorgesehen sind, welche wesentlich höher sind als den Bewegungen des Objekts entsprechende Frequenzen,
— in den Auswerteeinrichtungen Mittel zum Demodulieren der Bewegungsfrequenzen vorgesehen sind.

2. Vorrichtung nach Anspruch 1, dadurch gekennzeichnet, daß die Mittel zum Bewegen der Gitter piezokeramische Elemente umfassen.

3. Vorrichtung nach einem der vorhergehenden Ansprüche, dadurch gekennzeichnet, daß die ersten und zweiten optischen Einrichtungen ein teleskopisches System (13, 14) umfassen.

4. Vorrichtung nach Anspruch 3, dadurch gekennzeichnet, daß im einfallenden Licht vor dem teleskopischen System (13, 14) weitere abbildende Elemente (5, 9, 11, 12) so angeordnet sind, daß der Einstrahlwinkel auf das Objekt durch die relative Position der beiden Gitter und der abbildenden Elemente festgelegt ist.

**Revendications**

1. Dispositif pour la mesure photo-électrique sans contact de la vitesse d'objets se déplaçant dans un espace d'objet, comportant

— une source de rayonnement optique (1) pour engendrer un faisceau cohérent (2) de lumière de mesure polarisé de façon linéaire,
— un séparateur de rayons (24, 25, 10) pour diviser le faisceau de lumière de mesure en au moins une paire de rayonnements partiels polarisés différemment (6, 7) dont les fréquences sont dans un rapport prescrit,
— des premiers agencements optiques (9, 11 à 14) avec lesquels les deux rayonnements partiels de la ou des paires sont amenés à se recouper dans l'espace d'objet,
— une paire de récepteurs photo-électriques (23) adjointe à chacun des rayonnements partiels de la ou des paires,
— des deuxièmes agencement optiques (13, 14, 19) pour projeter chaque fois une partie des fractions de chacun des rayonnements partiels, dispersées dans une direction prescrite, chaque fois sur un des récepteurs adjoints à la paire de rayonnements partiels,
— des moyens (19) pour adapter les directions de polarisation des parties de rayonnement provenant de rayonnements partiels différents et arrivant chaque fois à un récepteur,
— des agencements d'interprétation pour déterminer la vitesse de l'objet en partant des fréquences de battement apparaissant aux récepteurs,

caractérisé par le fait que

— le séparateur de rayons comprend deux grilles (24, 25) disposées l'une derrière l'autre et parallèlement entre elles dans le faisceau de lumière de mesure (2) avec un alignement différent des lignes de grille, par lesquelles sont engendrées deux paires de rayonnements partiels situés dans des plans différents,
— des moyens sont prévus pour déplacer les grilles (24, 25) à des fréquences (81, 82) différentes l'une de l'autre, fréquences qui sont notablement plus élevées que les fréquences correspondant aux mouvement de l'objet,
— dans les agencements d'interprétation sont prévus des moyens pour démoduler les fréquences de mouvement.

2. Dispositif selon la revendication 1, caractérisé par le fait que les moyens assurant le déplacement de la grille comprennent des éléments piézocéramiques.

3. Dispositif selon l'une des revendications précédentes, caractérisé par le fait que les premier et · deuxième agencements optiques comprennent un système télescopique (13, 14).

4. Dispositif selon la revendication 3, caractérisé par le fait que, dans la lumière incidente, avant le système télescopique (13, 14), d'autres éléments de formation d'image (5, 9, 11, 12) sont disposés de telle sorte que l'angle d'incidence sur l'objet est fixé par la position relative des deux grilles et des éléments de formation d'image.

**Claims**

1. A device for the non-contact photoelectric measurement of the velocity of objects moving in an object space, having

— a source (1) of optical radiation for the generation of a linearly polarized coherent pencil (2) · of rays of measuring light,
— a beam-divider (24, 25, 10) for splitting up the pencil of rays of measuring light into at least one pair of differently polarized partial beams (6, 7), the frequencies of which are in a predetermined relationship;
— first optical devices (9, 11—14) by which the two partial beams of the at least one pair are caused to intersect in the object space;
— associated with the partial beams of the at least one pair, in every case one pair of photoelectric receivers (23);
— second optical devices (13, 14, 19) for the projection in every case of one part of the portions of each one partial beam diffused from the object in a predetermined direction, onto in each case one of the receivers associated with the pair of partial beams;
— means (19) of matching the directions of polarization of the portions of radiation originating from different partial beams and arriving at anytime at one receiver;
— evaluation devices for the determination of the velocity of the object from the beat frequencies resulting at the receivers;

characterized in that

— the beam-divider comprises two gratings (24, 25) arranged in the pencil (2) of rays of measuring light one behind the other and parallel with one another, which have different alignments of the grating lines and through which two pairs of partial beams lying in different planes are generated;
— means are provided for moving the gratings (24, 25) at frequencies (81, 82) which differ from one another, and which are considerably higher than frequencies corresponding with the motions of the object; .
— in the evaluation devices means are provided for demodulating the motion frequencies.

2. A device as in Claim 1, characterized in that the means of moving the gratings comprise piezoceramic elements.

3. A device as in one of the preceding Claims, characterized in that the first and second optical devices comprise a telescopic system (13, 14).

4. A device as in Claim 3, characterized in that in the incident light before the telescopic system (13, 14) further image-forming elements (5, 9, 11, 12) are so arranged that the angle of arrival upon the object is established through the relative positions of the two gratings and the image-forming elements.

FIG.1

FIG. 2

$$\Delta\alpha = \alpha_{+1} - \alpha_{-1} = \arcsin\left(\frac{\lambda}{g} + \sin\alpha_e\right) - \arcsin\left(-\frac{\lambda}{g} + \sin\alpha_e\right)$$

$$\frac{\delta(\Delta\alpha)}{\Delta\alpha} \leq \frac{1}{2}\sin^2\alpha_e$$

FIG.3 : Fehler $\delta(\Delta\alpha)$ des Aufspaltwinkels $\Delta\alpha$